# EUROPEAN PATENT SPECIFICATION

(11) **EP 0 578 503 B1**
(45) Date of publication and mention of the grant of the patent: **17.09.1997**
(21) Application number: 93305402.5
(22) Date of filing: 09.07.1993
(51) Int. Cl.: C10B 53/02, C10B 53/00

(54) **Apparatus for pyrolizing organic waste matter**
Vorrichtung für die Pyrolyse von organischen Abfallstoffen
Dispositif pour la pyrolyse de déchets organiques

(30) Priority: 10.07.1992 JP 207179/92
(43) Date of publication of application: 12.01.1994
(73) Proprietor: Shimizu, Hiroshi, Morioka-shi, Iwate 020-01 (JP)
(72) Inventor: Shimizu, Hiroshi, Morioka-shi, Iwate 020-01 (JP)
(74) Representative: W.P. Thompson & Co.

(56) References cited:
- EP-A- 0 026 450
- EP-A- 0 029 795
- DE-B- 2 244 753
- GB-A- 159 886
- US-A- 1 773 959
- US-A- 2 406 509
- US-A- 4 738 205

## Description

The present invention relates to apparatus for pyrolyzing organic waste matter whose water content is relatively low, such as (i) woody factory waste including bark, sawdust, fragment chips or the like, (ii) agricultural waste including rice husk or the like, (iii) house waste which has been crushed, (iv) woody waste chips including lumber from thinning or the like, and (v) combustible urban rubbish including synthetic resins or the like, so that the resulting gas, tar and combustion residue are individually collected in a separate manner.

The technology of pyrolyzing organic raw materials such as wood has a long history. As an example of power conversion, there has been known a motor vehicle in which wood was gasified and used as a form of fuel. However, since such power conversion is low in thermal efficiency, the source of energy fully relies on petroleum and natural gas these days. The fact is that consideration is hardly made of the utilization of organic raw materials.

However, in view of the efficient use of resources as well as the prevention of pollution, a review on the technology of pyrolyzing organic matter has been made, causing a variety of countries to make serious study to improve such technology. However, the result of such study has actually not reached yet the level where the pyrolysis technology can be spread in a prevailing manner. This is because decomposition products, i.e., tar and residue, have not been perfectly removed, preventing prolonged operation of an internal-combustion engine. Further, the calorific value of generated gas is too low to supply a sufficient output.

Dependent on the types of reaction furnaces to be used, conventional pyrolysis apparatus are divided into three groups. In a furnace of the first type, generated gas flows downwardly while the accumulation of a raw material is gradually moved downwardly. In this type, the accumulation successively forms a raw material layer, a drying layer, a pyrolysis layer, a combustion layer and a reduction layer in this order from top to bottom. In a furnace of the second type, generated gas flows upwardly and the accumulation successively forms a raw material layer, a drying layer, a pyrolysis layer, a reduction layer, a combustion layer and a cooling layer in this order from top to bottom. In a furnace of the third type, the raw material forms a fluidized bed and no stationary accumulation is formed. In all the types, the furnaces are the same in that they are of the direct heating system, because the furnaces are used with the object of obtaining gas which can serve as a power source.

However, these furnaces present the following defects inherent in their structures. In a furnace of the first type, gas is directly discharged from a high-temperature reduction layer, thus causing trouble as to the heat resistance of a grate and heat loss due to the discharge of high temperature gas. Further, dust and tar are liable to enter and mix with generated gas. In a furnace of the second type, generated gas is cooled while passing through the raw material layer, and then discharged at a temperature of about 60°C. Accordingly, a great amount of water content generated by drying and pyrolyzing the raw material, is condensed and stored in the raw material layer to form a so-called water shelf. Therefore, the raw material layer at a low temperature occupies a broad area of the furnace, and a gas passage is formed. This lowers the area of the reduction layer to prevent a reduction reaction from being sufficiently conducted. This results in a decrease in reaction efficiency. In a furnace of the third type, it is difficult to maintain a loaded raw material as separated in state according to the drying, pyrolysis, reduction and combustion steps. Further, since dust scattering and heat loss are excessive, the third type can be hardly put to practical use. Out of the three types, the first type is predominant over the world.

In pyrolysis apparatus for converting generated gas into power, it is required to obtain gas having a higher heat quantity with a higher efficiency, as well as to purify the gas to a higher degree with products more efficiently utilized. To achieve the former requirement, it is necessary to provide a broad reduction layer at a high temperature in the reaction furnace to convert incombustible CO₂ and H₂O into combustible CO and H₂ by a reduction reaction.

However, the first type (downward flow type) which is now internationally predominant, presents the following problem, in addition to the problems above-mentioned. That is, an excessively great amount of water content generated by drying and pyrolyzing the raw material, passes through the combustion layer and the reduction layer, making it difficult to maintain a high temperature as required. Further, carbon components are mostly consumed in the combustion layer to prevent the reduction reaction from being sufficiently conducted. Thus, the former requirement can be hardly achieved.

To solve the problems above-mentioned, the inventor has studied hard and found the following fact. That is, when the second type (upward flowing type) is improved such that water content generated is not condensed in the furnace but is discharged to the outside thereof, this eliminates the defect of the second type and provides a broad reduction layer in the furnace. Further, since a reduction reaction in the reduction layer is conducted before combustion and after pyrolysis, a maximum amount of carbon contents can be assured. Thus, the former requirement can be achieved.

At this time, tar generated in the course of pyrolysis is mostly discharged, together with generated gas and water content, to the outside of the furnace. Accordingly, water content and tar are individually removed from the gas, enabling the gas to be purified. The tar thus collected can be effectively utilized as re-supplied into the furnace. Further, reaction residue can be processed as useful products. Thus, the latter requirement can be achieved.

The pyrolysis apparatus according to the present invention has a reaction furnace whose upper portion is connected to a raw material supply casing and a gas discharge pipe, which is provided at a lower portion thereof with a residue discharge port, and in which a vent pipe for supplying air is disposed, and is characterized in that: the gas discharge pipe is connected, at the other end thereof, to an internal-combustion engine through a gas cooling device; a tar reservoir is connected to the lower end of the gas cooling device; and a temperature sensor is disposed in an upper space of the reaction furnace or in the gas discharge pipe in the vicinity of the reaction furnace; and is characterized by control means which controls the amount of a raw material to be supplied into the reaction furnace to maintain the temperature of gas flowing in the upper space of the reaction furnace or in the gas discharge pipe substantially at or in the vicinity of a predetermined temperature.

According to the present invention, the amount of a raw material supplied into the reaction furnace is preferably controlled with the use of the control means such that the temperature of gas flowing from the upper space of the reaction furnace to the gas discharge pipe, is maintained at the water boiling point or a temperature in the vicinity thereof. Accordingly, a great amount of water content generated in the upper portion of the furnace by drying and pyrolyzing the raw material, is not condensed, but is securely discharged to the outside of the furnace through the gas discharge pipe at the upper portion of the furnace. This prevents a low-temperature raw material layer containing condensed water content from occupying the inside of the furnace, so that a high-temperature reduction layer can be assured in a broad area in the furnace.

Further, the water content discharged to the outside of the furnace is condensed in the gas cooling device and falls, together with tar simultaneously discharged, in a tar reservoir disposed at the lower end of the gas cooling device. This causes the water content to be separated from generated gas. Accordingly, the water content is not returned back into the furnace and purified gas can be obtained.

By way of example only, specific embodiments of the present invention will now be described, with reference to the accompanying drawings, in which:-
Fig. 1 is a view of a first embodiment of pyrolysis apparatus according to the present invention;
Fig. 2 is a vertical section view of a reaction furnace of the apparatus in Fig. 1;
Fig. 3 is a vertical section view of a tar reservoir of the apparatus in Fig. 1;
Fig. 4 is a vertical section view of a reaction furnace of a second embodiment of pyrolysis apparatus according to the present invention; and
Fig. 5 is a vertical section view of a reaction furnace of a third embodiment of pyrolysis apparatus according to the present invention.

The following description will discuss in detail pyrolysis apparatus according to the present invention with reference to the attached drawings.

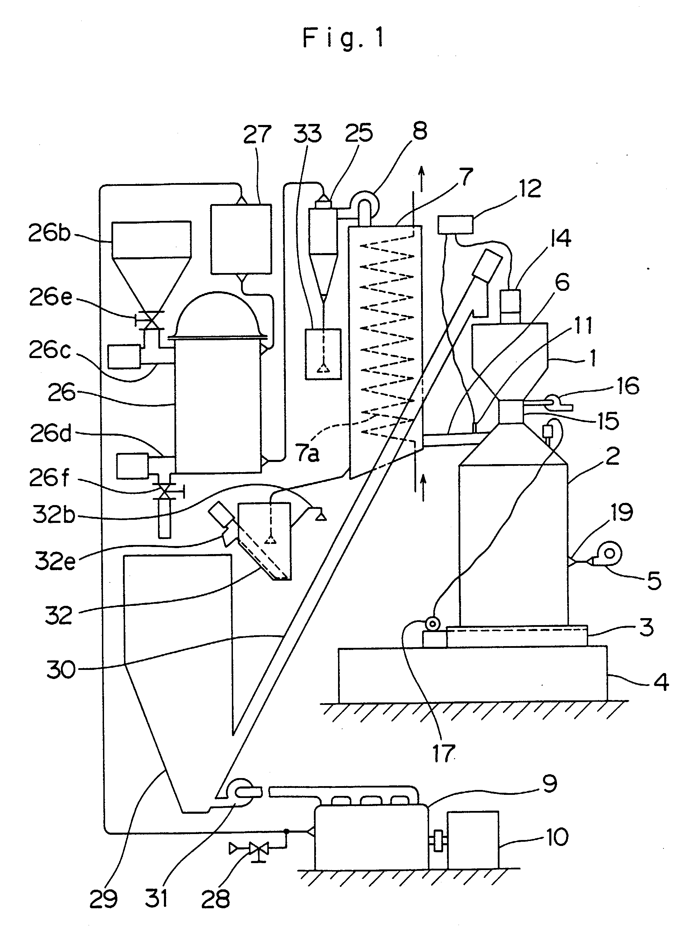

As shown in Fig. 1, a pyrolysis reaction furnace 2 is provided at a lower portion thereof with a residue discharge port 3, and disposed on an installation stand 4. A raw material supply hopper 1 is disposed on the pyrolysis reaction furnace 2, and a gas discharge pipe 6 is connected to an upper portion of the reaction furnace 2. An air pump 5 for combustion is attached to the reaction furnace 2 at a lateral side thereof.

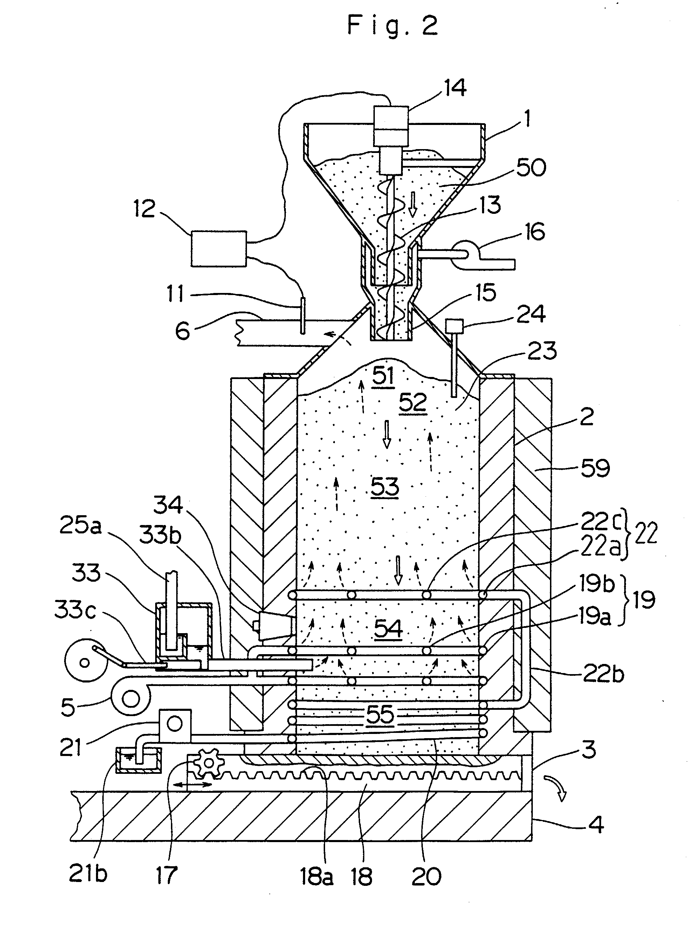

As shown in Fig. 2, the hopper 1 is fitted to a raw material supply casing 15 disposed at the upper end of the reaction furnace 2 with the lower end of the hopper 1 inserted into the raw material supply casing 15. A conveyor 13 passes through the hopper 1 and the raw material supply casing 15, and is adapted to supply a raw material 50 by the rotation of a drive motor 14 attached to the upper end of the conveyor 13. A suction blower 16 is disposed at a part of a lateral wall of the raw material supply casing 15, this part being located in a position higher than the lower-end opening of the hopper 1, thus preventing air from entering the reaction furnace 2 together with the raw material 50 from the hopper 1.

The reaction furnace 2 is covered at the periphery thereof with a heat insulating member 59, so that the reaction furnace 2 is provided with high heat insulating properties and high air tightness. As shown in Fig. 2, the reaction furnace 2 has an ignition port 34, through which the raw material 50 is ignited. The ignition port 34 has a hermetically sealed stopper structure of the openable type. The ignition port 34 is attached to a lateral wall of the reaction furnace 2 corresponding to a combustion layer.

Disposed under the ignition port 34 are vent pipes 19 each having a plurality of small holes. One end of the vent pipe 19 communicates with the air pump 5. The vent pipe 19 includes outer periphery-side vent pipe 19a and center-side vent pipes 19b. Accordingly, the reaction furnace 2 can be uniformly ventilated.

A coil-like cooling pipe 20 is disposed in the vicinity of the bottom of the reaction furnace 2. Water is adapted to be supplied to this cooling pipe 20 through a water pump 21 of the qualitative type having a water reservoir 21b. The other end of the cooling pipe 20 communicates with a water pipe 22 through a bypass pipe 22b which passes outisde of the reaction furnace 2. Each of the water pipes 22 has a plurality of small holes in the wall thereof. The water pipes 22 include outer periphery-side water pipe 22a and center-side water pipes 22c.

The reaction furnace 2 is provided at the bottom thereof with a residue discharge device 18 for discharging residue through the residue discharge port 3 in a lateral side of the reaction furnace 2. The residue discharge device 18 is provided at a side thereof with a rack 18a meshed with a drive gear 17. By the reciprocating movement of the residue discharge device 18, residue falling from the reaction furnace 2 is pushed out through the residue discharge port 3. The drive gear 17 is connected to a speed reduction motor (not shown).

As shown in Fig. 2, an accumulation of raw material 23 in the reaction furnace 2 is successively divided into a drying layer 51, a pyrolysis layer 52, a reduction layer 53, a combustion layer 54 and a cooling layer 55 in this order from top to bottom.

A temperature sensor 24 is disposed at an upper portion of the reaction furnace 2. The temperature sensor 24 is adapted to detect the height of the accumulation 23 based on the temperature thereof in the reaction furnace 2, thereby to control the drive of the drive gear 17, so that the amount of residue to be discharged by the residue discharge device 18 is adjusted. That is, the temperature of the accumulation 23 is higher than the temperature of the upper space of the reaction furnace 2. Accordingly, when the temperature of the accumulation 23 is detected by the temperature sensor 24 installed at a predetermined height, it can be informed whether or not the height of the accumulation 23 has reached a predetermined height.

As shown in Fig. 1, the gas discharge pipe 6 has one end connected to the reaction furnace 2 and the other end connected to a gas cooling device 7 having a water cooling pipe 7a. In the apparatus, there are successively disposed, along a gas passage from the gas cooling device 7, a suction blower 8, a tar separator 25, a filter device 26, a neutralizing device 27 and an internal-combustion engine 9 in this order. In this embodiment, a generator 10 is driven by power obtained in the internal-combustion engine 9.

A temperature sensor 11 is attached to the gas discharge pipe 6 in the vicinity of the reaction furnace 2. Through a temperature adjusting device 12, the temperature sensor 11 is electrically connected to the drive motor 14 for driving the conveyor 13 for supplying the raw material. According to gas temperature detected by the temperature sensor 11, there is controlled the amount of rotations of the conveyor 13, i.e., the amount of the raw material 50 to be supplied.

As the tar separator 25, there may be used, for example, a cyclon having a centrifugal function. The tar separator 25 is connected to the outlet port of the suction blower 8.

The filter device 26 is charged with the raw material 50 serving as a filter medium. A hopper 26b for supplying the raw material is disposed on the filter device 26 and attached thereto through supply means 26c (for example, a conveyor). The hopper 26b is adapted to supply the raw material 50 continuously or intermittently to the filter device 26. Disposed under the filter device 26 is raw material discharge means 26d (for example, a conveyor) for discharging the raw material used as a filter medium to a raw material reservoir 29. Airtight valves 26e, 26f are respectively attached to the supply means 26c and the discharge means 26d. Gas coming out from the tar separator 25 enters the filter device 26 at a lower portion thereof. After a small amount of residual tar contained in the gas is separated therefrom, the gas is discharged from the filter device 26 through an upper portion thereof. Accordingly, each time the filter medium is contaminated with tar, a new raw material can be supplied to discharge the contaminated raw material serving as filter medium, so that the filter medium can be renewed.

Raw material in the raw material reservoir 29 also containing the raw material used as a filter medium, is conveyed to the hopper 1 by a conveying device 30. A blower 31 is connected to the raw material reservoir 29 at a lower portion thereof. The blower 31 is adapted to suck exhaust heat generated in the internal-combustion engine 9 and to discharge the same to the raw material reservoir 29 at a lower portion thereof, so that the raw material is preliminarily dried.

On the other hand, the gas having passed through the filter device 26 is sent to the neutralizing device 27 charged with lime or the like. The neutralizing device 27 is disposed for removing malignant gases such as chlorine and sulfur contained in the gas and liable to contaminate the air. Provision may be made such that a filler such as lime or the like with which the neutralizing device 27 is charged, is automatically renewed likewise the filter medium in the filter device 26.

The gas having passed through the neutralizing device 27, is mixed with air at a predetermined ratio by an air mixing device 28 and then sent to the internal-combustion engine 9 where the resulting mixture is converted into power.

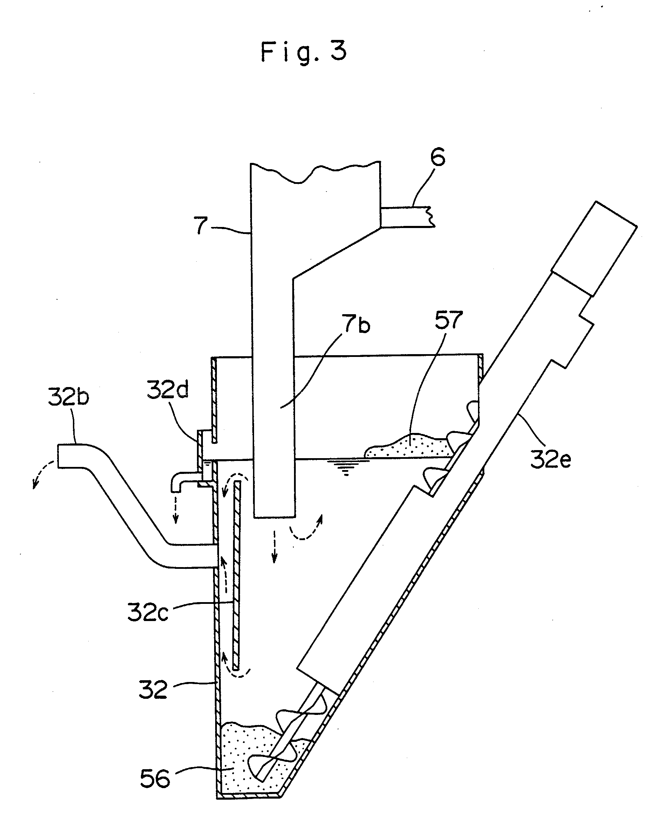

A tar reservoir 32 is connected to the gas cooling device 7 at the bottom thereof. As shown in Fig. 3, a discharge pipe 7b extending from the bottom of the gas cooling device 7, is located below the liquid level in the tar reservoir 32. This prevents air from entering the cooling device 7. A drain pipe 32b is attached to the tar reservoir 32 at the intermediate part thereof. The drain pipe 32b has a siphon function and effects an operation of regulating the liquid level in the tar reservoir 32. A partitioning plate 32c is disposed in the tar reservoir 32 to obtain a liquid of intermediate specific gravity (e.g., pyrolignous acid) which has been purified as separated from tar. An overflow frame 32d is disposed at an upper portion of the tar reservoir 32 to obtain a liquid of light specific gravity (e.g., liquid oil) such as soft tar which has risen to the liquid surface in the tar reservoir 32. Also disposed at the tar reservoir 32 is a drawing device 32e for drawing up a deposit 56 (heavy tar) accumulated on the bottom of the tar reservoir 32 and a small amount of scum 57 coming to the surface of the liquid level. As the drawing device 32e, a conveyor or the like may be used. The deposit and scum thus drawn up are conveyed to the raw material reservoir 29 for reuse. Thus, the liquid of intermediate specific gravity and the liquid of light specific gravity can be collected as separated from the tar so that such liquids and the tar can be effectively utilized.

As shown in Fig. 1, a tar reservoir 33 is also disposed under the tar separator 25 for storing a liquid which falls from the tar separator 25. As shown in Fig. 2, the tar reservoir 33 is arranged such that a discharge pipe 25a extending from the bottom of the tar separator 25 is located below the liquid level in the tar reservoir 33 to prevent the generated gas from entering the tar reservoir 33 from the tar separator 25. Further, the liquid inside of the tar reservoir 33 is sent under pressure to the combustion layer 54 in the reaction furnace 2 by a plunger device 33c through a pipe 33b.

The following will discuss the operation of the pyrolysis apparatus of this embodiment.

First, the drive motor 14 is manually operated to charge the reaction furnace 2 with the raw material 50 from the hopper 1. When the raw material 50 is accumulated up to the level of the vent pipe 19, the supply of raw material is stopped and the surface of the accumulation 23 is ignited. Then, the air pump 5 for sending combustion air is set to a preliminary operation mode in which the amount of air to be supplied is low. The drive motor 14 is then switched to an automatic operation mode in which the drive motor 14 is to be controlled by the temperature adjusting device 12. The suction blowers 8, 16 are operated.

As a result, air is supplied from the vent pipe 19 so that generated gas flows upwardly in the reaction furnace 2 and is guided to the gas discharge pipe 6. At this time, when the temperature sensor 11 in the gas discharge pipe 6 detects a temperature higher than a preset temperature, i.e., the water boiling point (normally 100°C), or a temperature in the vicinity thereof, the temperature adjusting device 12 supplies a signal, according to which there is started the supply of the raw material 50 to the reaction furnace 2. A heat quantity in the reaction furnace 2 is consumed for drying the raw material 50 newly supplied and for raising the temperature thereof, thus lowering the discharged gas in temperature. When the temperature of the discharged gas becomes lower than the preset temperature, the supply of raw material is stopped until the temperature of the discharged gas is raised to the preset temperature.

A timer (not shown) is disposed such that these operations by the temperature adjusting device 12 are intermittently made to supply the raw material at a low speed. While the temperature is controlled, the accumulation 23 is gradually increased in height to assure a sufficient height of accumulation in the reaction furnace 2. At this time, the air pump 5 is switched from the preliminary operation mode to a normal operation mode. When the amount of ventillation is proper and uniform, oxygen is consumed in the vicinity of the vent pipe 19 to form the combustion layer 54 at high temperature of not less than 1000°C. High temperature gas free from oxygen generated in the combustion layer 54 is sent upwardly to form an area of the reduction layer 53.

On the other hand, the temperature adjusting device 12 maintains the temperature in the gas discharge pipe 6 at the water boiling point or a temperature in the vicinity thereof. Accordingly, the temperature of the drying layer 51 in the accumulation 23 is also maintained substantially at the water boiling point or a temperature in the vicinity thereof. As a result, a great amount of water content generated by drying and pyrolyzing the supplied raw material, is rapidly discharged, in the form of steam or mist, together with the discharged gas, and is therefore not accumulated in the reaction furnace 2. Accordingly, the raw material layer at a low temperature containing water content does not occupy a broad area in the reaction furnace 2, so that the thickness of the drying layer 51 is very thin. Further, since dry distillation in the pyrolysis layer 52 is completed by about 600°C, the thickness of the pyrolysis layer 52 is not excessive. This assures the reduction layer 53 in a broad area between the pyrolysis layer 52 and the combustion layer 54.

When the height of the accumulation 23 becomes sufficient so that the temperature sensor 24 is surrounded by the accumulation 23, the temperature sensor 24 detects the high temperature of the accumulation 23. This causes the residue discharge device 18 to be driven, thereby to discharge a suitable amount of residue from the residue discharge port 3 in the bottom of the reaction furnace 2. This causes the accumulation 23 to be lowered in height, so that a raw material rich in carbon components is moved toward the vent pipe 19 and burnt to continue the reaction.

Since the cooling pipe 20 is disposed between the vent pipe 19 and the residue discharge port 3, combustion residue of high temperature can be cooled and then sent to the residue discharge port 3. This prevents the residue discharge device 18 from being excessively heated. Further, water passing through the cooling pipe 20 is heated and converted into steam. Through the bypass pipe 22b, the steam is sent to the water pipe 22 and discharged into the reduction layer 53. Accordingly, in the reduction layer 53, there is conducted a water gas reaction of the following formula (2), in addition to a reduction reaction using combustion products of the following formula (1):

CO₂ + C = 2CO (1)

H₂O + C = CO + H₂ (2)

At this time, the reduction layer 53 presents a high temperature and occupies a broad area. Accordingly, the reactions above-mentioned can be sufficiently conducted. This results in remarkable improvement in the calorific value of generated gas.

The reduction reaction and the combustion for supplying a heat quantity required for this reduction reaction, consume carbon remaining after pyrolysis, thereby to determine the ash content rate in the discharged residue. Accordingly, there is also determined the amount of air to be supplied for maintaining the combustion conditions optimum. Therefore, the temperature sensor 24 is installed at a predetermined height according to predetermined conditions of gas and residue, thereby to control the operation of the residue discharge device 18 under optimum conditions.

Generated gas is sucked by the suction blower 8 and sufficiently cooled by the gas cooling device 7. The gas is divided into tar and water content, and the tar thus separated is stored in the tar reservoir 32. The suction blower 16 is attached, as an auxiliary blower, to the raw material supply casing 15. Accordingly, even though air mixingly enters together with the raw material 50 from the hopper 1, such air can be discharged by the suction blower 16. Therefore, without use of an expensive airtight raw material supply device, the mixing entrance of air from the hopper 1 can be prevented. This eliminates the possibility of explosion due to the inclusion of air in the gas. The sucking force of the suction blower 16 may be matched to that of the suction blower 8 and may be adjusted to an extent that gas generated in the reaction furnace 2 is slightly discharged.

Tar contained in gas generated by pyrolysis is generally divided into a heavy tar portion containing soot, chips and the like, a pyrolignous acid portion mainly consisting of water, and a soft tar portion containing high-molecular resins and a liquid oil content such as methanol or the like. Tar separated from generated gas is stored, as divided into these three portions, in the tar reservoir 32, and these three portions will be respectively reused.

On the other hand, tar separated by the tar separator 25 downstream of the gas cooling device 7 is mainly composed of soft tar of low specific gravity presenting a low boiling point. Therefore, such tar may be used as a raw material to be processed, or may be supplied to the combustion layer 54 in the reaction furnace 2 with the use of a device such as the plunger device 33c shown in Fig. 2, the tar thus supplied to the layer 54 being burnt and converted into heat.

In the filter device 26, tar which still remains in the form of a micro mist, is perfectly removed. A filter medium which has been used, is sent, as the raw material, to the reaction furnace 2. In gas to be filtered in the filter device 26, the water content has been previously removed by the gas cooling device 7. Accordingly, no water content is contained in the raw material. In the neutralizing device 27 downstream of the filter device 26, chlorine and sulfur content are removed. This prevents the occurrence of pollution in the course of combustion in the internal-combustion engine 9.

Gas purified in the manner above-mentioned, is mixed with a predetermined amount of air in the air mixing device 28, and then sent to the internal-combustion engine 9 where the gas is converted into power.

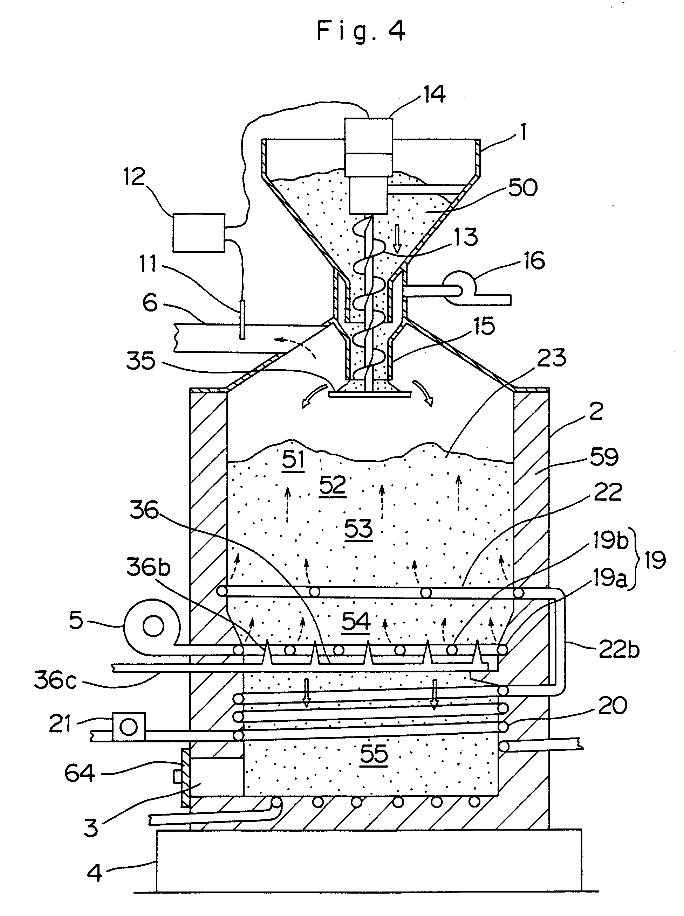

The following description will discuss another embodiment of the present invention with reference to Fig. 4. While the pyrolysis apparatus in Figs. 1 to 3 is suitable for an application using bark as the raw material, the pyrolysis apparatus in Fig. 4 is suitable for an application mainly using, as the raw material, saw dust whose particle size is relatively small and whose ash content is low.

As shown in Fig. 4, a hermetically sealing lid 64 is attached to a residue discharge port 3 and adapted such that residue can be removed by opening this lid 64. The number of center-side vent pipes 19b of vent pipe 19 is greater than that in the embodiment shown in Fig. 2. Attached to the lower end of a conveyor 13 attached to a hopper 1, is a distributing device 35 to be rotated by the rotation of the conveyor 13. A centrifugal force generated by the rotation of the distributing device 35 causes raw material powder to be uniformly dispersed in a wide range.

A grate 36 is disposed under the vent pipe 19. The grate 36 has a plurality of projections 36b and a horizontal swing rod 36c. The projections 36b are inserted between adjacent vent pipes 19a, 19b for accelerating the fall of raw material powder caused by the swing movement of the grate 36.

Other parts are similar to those in the pyrolysis apparatus shown in Figs. 1 to 3, and these like parts are designated by like numerals used in Fig. 2 with description thereof omitted.

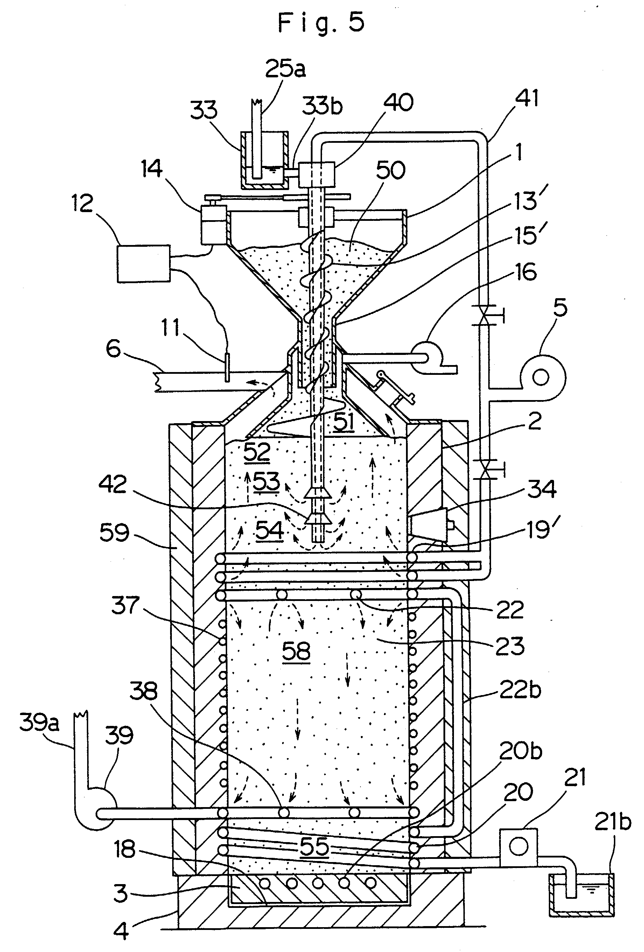

Fig. 5 shows a further embodiment of the present invention, which is suitable for an application ma using the raw material, such as rice husk, cont a great amount of silicic acid.

As shown in Fig. 5, a vent pipe 19' is located in a reaction furnace 2 at a position which is higher than the intermediate part thereof and which is separated by a certain distance from a cooling pipe 20. The area between the vent pipe 19' and the cooling pipe 20 forms a second reduction layer 58. A heating body 37, in the form of an electrical heating element for heating at about 1350°C for 3 hours or more, is disposed at the inner surface of the reaction furnace 2 in the area forming this second reduction layer 58.

A suction pipe 38 having a structure similar to that of the vent pipe 19', is disposed between the heating body 37 and the cooling pipe 20. Connected to the suction pipe 38 is a suction blower 39. A gas outlet pipe 39a of the suction blower 39 is connected to a line communicating with an internal-combustion engine 9 for sending outlet gas thereto. Instead of the suction blower 39, gas may be sucked from both a gas discharge pipe 6 and the suction pipe 38 by the suction blower 8 shown in Fig. 1.

A water pipe 22 connected to the cooling pipe 20 through a bypass pipe 22b is located in a position lower than the vent pipe 19' for mainly supplying water content into the second reduction layer 58 as shown by arrows. A cooling pipe 20b is embedded in the upper portion of a residue discharge device 18 disposed at a residue discharge port 3.

Each of a raw material supply casing 15' and a conveyor 13' is made in the form of a cone of which diameter is gradually increased in the downward direction thereof. Thus, a raw material 50 can be supplied under pressure to an accumulation of raw material 23. Such a supply method is suitable for charging, with high density, a furnace with rice husk or the like of whose bulk density is low.

A branch pipe 41 branched from the vent pipe 19' connected to an air pump 5, passes through the conveyor 13' in its hollow shaft up to the tip thereof. The tip of the hollow shaft of the conveyor 13' is opened and inserted into a combustion layer 54 in the reaction furnace 2. Small holes are formed in the vicinity of the tip of the hollow shaft. These small holes are covered with skirt members 42 for preventing the holes from being clogged. Corresponding to the hollow shaft of the conveyor 13', the branch pipe 41 is also opened at its tip, and has holes at positions corresponding to the small holes in the hollow shaft, so that air is supplied to the combustion layer 54.

A slip ring 40 is attached to the upper end of the hollow shaft of the conveyor 13', which is hermetically connected to a tar reservoir 33 through a pipe 33b. Accordingly, tar is sent from the tar reservoir 33 into the hollow shaft of the conveyor 13'. While falling down in the hollow shaft, the tar is dry-distilled for discharging generated gas together with air into the reaction furnace 2. Dregs sent, together with tar, into the hollow shaft may be pushed out to the combustion layer 54, for example, by attaching spiral blades to the outer peripheral surface of the branched pipe 41.

The amounts of air passing through the vent pipe 19' and the branch pipe 41 are adjusted by adjusting valves.

In the embodiment shown in Fig. 5, the heating body 37 disposed in the reaction furnace 2 between the cooling pipe 20 and the vent pipe 19' increases a heat quantity generated in the combustion layer 54 and maintains the temperature of the second reduction layer 58 at 1300°C or more. As a result, the inside of the second reduction layer 58 is held in a reduction state containing carbon components. Accordingly, a reaction of the following formula (3) proceeds:

SiO₂ + 3C = SiC + 2CO (3)

Accordingly, when the second reduction layer 58 is formed in a broad area by the heating body 37 to assure a sufficient reaction time, the reaction above-mentioned can smoothly proceed. Further, the water pipe 22 is disposed under and in the vicinity of the vent pipe 19'. Accordingly, a water gas reaction similar to the reaction mentioned earlier proceeds to further increase gas in heat quantity. Further, gases of H₂ and CO generated by the water gas reaction flow in the second reduction layer 58. This effectively accelerates the reaction of the formula (3). Generated gas is sucked by the suction pipe 38 and sent to the internal-combustion engine 9. Further, produced SiC is collected through the residue discharge port 3.

In the foregoing, the temperature sensor 11 is attached to the gas discharge pipe 6, but may be attached to an upper space of the reaction furnace 2. Such an arrangement may also produce similar effects. In Figs. 2, 4 and 5, a screw conveyor is shown as the conveyor 13, 13'. However, the conveyor 13, 13' is not limited to such a screw conveyor. More specifically, when a screw conveyor is used as the conveyor 13, 13' and chips are used as the raw material, there is the likelihood that gaps between the the inner wall of the hopper 1 or the raw material supply casing 15, 15' and the screw conveyor, get clogged with the raw material, so that the conveyor 13, 13' cannot be rotated. In such a case, it is desired to use, as the conveyor, a rotary shaft having a plurality of projections for accelerating the fall of the raw material. Such a conveyor having projections is particularly effective when the distributing device 35 is disposed as shown in Fig. 4.

The description has been made of preferred embodiments of the present invention. However, the present invention is not limited only to these embodiments.

## Claims

1. Apparatus for pyrolyzing organic waste matter comprising a reaction furnace (2) whose upper portion is connected to a raw material supply casing (15) and a gas discharge pipe (6), and which is provided with a residue discharge port (3) at a lower portion thereof, and a vent pipe (19, 19') for supplying air characterized in that:
said gas discharge pipe (6) is connected, at the other end thereof, to an internal-combustion engine (9) through a gas cooling device (7);
a tar reservoir (32) is connected to the lower end of said gas cooling device (7); and
a temperature sensor (11) is disposed in an upper space of said reaction furnace (2) or in said gas discharge pipe (6) in the vicinity of said reaction furnace (2);
and characterized by control means (12) which controls the amount of a raw material to be supplied into said reaction furnace (2) to maintain the temperature of gas flowing in said upper space of said reaction furnace (2) or in said gas discharge pipe (6) substantially at or in the vicinity of a predetermined temperature.

2. Apparatus according to claim 1, wherein
a cooling pipe (20) having one end connected to a water pump (21) is installed between the vent pipe (19) and the residue discharge port (3) in the reaction furnace (2), and
said cooling pipe (20) is connected, at the other end thereof, to a water pipe (22) located in the lower end of a reduction area in said reaction furnace (2), steam being supplied from said water pipe (22) into said reaction furnace (2).

3. Apparatus according to claim 1 or claim 2, wherein a temperature sensor (24) for detecting the presence of an accumulation of raw material (23) in the reaction furnace (2), is disposed at a predetermined height in said reaction furnace (2) and control means (12) are provided to control the amount of residue to be discharged from the residue discharge port (3) to maintain the height of said accumulation (23) substantially constant.

4. Apparatus according to any of claims 1 to 3, further comprising:
a main suction blower (8) for discharging gas through the gas discharge pipe (6); and
an auxiliary suction blower (16) for discharging air entering from a raw material supply hopper (1) inserted into the raw material supply casing (15), said auxiliary suction blower (16) being disposed at a part of a lateral wall of said raw material supply casing (15), said part being located in a position higher than the lower opening of said hopper (1).

5. Apparatus according to any of claims 1 to 4, wherein the tar reservoir (32) is adapted such that tar deposits on the bottom thereof, said tar reservoir (32) being provided at upper and intermediate portions thereof with ports through which a liquid of light specific gravity and a liquid of intermediate specific gravity may be respectively withdrawn.

6. Apparatus according to any of claims 1 to 5, wherein a tar separator (25) is connected to a pipe at the outlet side of the gas cooling device (7), and a tar reservoir (33) is connected to the tar separator 25.

7. Apparatus according to Claim 6, wherein a plunger device (33c) is attached to the tar reservoir (33) for sending, under pressure, a liquid in said tar reservoir (33) to a combustion layer (54).

8. Apparatus according to any of claims 1 to 7, further comprising, between the gas cooling device (7) and the internal-combustion engine (9), a filter device (26) for removing residual tar from gas and which uses, as a filter medium, a raw material to be guided to the raw material supply casing (15), said filter device (26) comprising means (26b) for replacing said filter medium with new material and means (26d) for guiding said contaminated filter medium to said raw material supply casing (15) when said filter medium in said filter device (26) is contaminated.

9. Apparatus according to any of claims 1 to 8,
further comprising gas suction pipes (38) each having a plurality of small holes, disposed in the vicinity of the residue discharge port (3) in the reaction furnace (2), said gas suction pipes (38) having one ends communicating, through a suction blower (39), with a line extending to the internal-combustion engine (9), and
a heating body (37) is disposed in said reaction furnace (2) between the vent pipe (19) and said gas suction pipes (38).

10. Apparatus as claimed in any of claims 1 to 9, wherein the control means is adapted to maintain the temperature of gas flowing in said gas discharge pipe (6) substantially at or in the vicinity of water boiling point.

## Patentansprüche

1. Eine Vorrichtung für die Pyrolyse von organischen Abfallstoffen, die einen Reaktionsofen (2) aufweist, der an seinem oberen Teil mit einem Rohmaterial-Zufuhrgehäuse (15) und einem Gasabflußrohr (6) verbunden, sowie an einem unteren Teil mit einer Rückstandaustragsöffnung (3) und einem Lüftungsrohr (19, 19') zur Luftzufuhr versehen ist, dadurch gekennzeichnet, daß:
besagtes Gasabflußrohr (6) an seinem anderen Ende durch eine Gaskühlvorrichtung (7) mit einem Verbrennungsmotor (9) verbunden ist;
am unteren Ende der besagten Gaskühlvorrichtung (7) ein Teerreservoir (32) angeschlossen ist; und
ein Temperaturfühler (11) in einem oberen Raum des besagten Reaktionsofens (2) oder in besagten Gasabflußrohr (6) in Nähe des besagten Reaktionsofens (2) angeordnet ist;
und gekennzeichnet durch Regelungsmittel (12), die die Menge eines in besagten Reaktionsofen (2) zu speisenden Rohmaterials regeln, um die Temperatur des in dem besagten oberen Raum des besagten Reaktionsofens (2) oder in dem besagten Gasabflußrohr (6) fließenden Gases wesentlich auf oder in Nähe einer vorbestimmten Temperatur zu halten.

2. Eine Vorrichtung nach Anspruch 1, bei der ein Kühlrohr (20), das an einem Ende an eine Wasserpumpe (21) angeschlossen ist, zwischen dem Lüftungsrohr (19) und der Rückstandaustragsöffnung (3) in dem Reaktionsofen (2) montiert ist, und
wobei besagtes Kühlrohr (20) an seinem anderen Ende an ein Wasserrohr (22), das sich im unteren Ende einer Reduktionszone in besagtem Reaktionsofen (2) befindet, angeschlossen ist, dem von besagtem Wasserrohr (22) Dampf zugeführt wird.

3. Eine Vorrichtung nach Anspruch 1 oder Anspruch 2, bei der ein Temperaturfühler (24), um die Gegenwart einer Ansammlung von Rohmaterial (23) im Reaktionsofen (2) festzustellen, in besagtem Reaktionsofen (2) auf einer vorbestimmten Höhe angeordnet ist und Regelungsmittel (12) vorgesehen sind, um die Menge des aus der Rückstandaustragsöffnung (3) auszutragenden Rückstands zu regeln, damit die Höhe der besagten Ansammlung (23) wesentlich konstant gehalten wird.

4. Eine Vorrichtung nach einem der Ansprüche 1 bis 3, die ferner folgendes aufweist:
ein Hauptsauggebläse (8) zum Ablassen von Gas durch das Gasabflußrohr (6); und
ein Hilfssauggebläse (16) zum Ablassen von Luft, die aus einem Rohmaterial-Einfülltrichter (1) eintritt, der in das Rohmaterial-Zufuhrgehäuse (15) eingefügt ist, wobei besagtes Hilfssauggebläse (16) an einem über der unteren Öffnung besagten Trichters (1) befindlichen Teil einer Seitenwand des besagten Rohmaterial-Zufuhrgehäuses (15) angeordnet ist.

5. Eine Vorrichtung nach einem der ansprüche 1 bis 4, bei der das Teerreservoir (32) so adaptiert ist, um Teer auf seinem Boden abzusetzen, wobei besagtes Teerreservoir (32) an seinen oberen und intermediären Teilen mit Öffnungen versehen ist, durch welche jeweils eine Flüssigkeit mit niedrigem spezifischen Gewicht bzw. eine Flüssigkeit mit intermediärem spezifischen Gewicht abgezogen werden kann.

6. Eine Vorrichtung nach einem der Ansprüche 1 bis 5, bei der ein Teerabscheider (25) an einem Rohr an der Abzugseite der Gaskühlvorrichtung (7) und ein Teerreservoir (33) an den Teerabscheider 25 angeschlossen sind.

7. Eine Vorrichtung nach Anspruch 6, bei der am Teerreservoir (33) eine Kolbenvorrichtung (33c) angebracht ist, um eine Flüssigkeit in besagtem Teerreservoir (33) unter Druck in eine Verbrennungsschicht (54) zu befördern.

8. Eine Vorrichtung nach einem der Ansprüche 1 bis 7, die zwischen der Gaskühlvorrichtung (7) und dem Verbrennungsmotor (9) ferner eine Filtervorrichtung (26) aufweist, um Rückstandsteer aus Gas zu entfernen, in der als Filtermedium ein dem Rohmaterial-Zufuhrgehäuse (15) zuzuführendes Rohmaterial verwendet wird, wobei besagte Filtervorrichtung (26) Mittel (26b), um besagtes Filtermedium durch neues Material zu ersetzen, sowie Mittel (26d) aufweist, um besagtes kontaminiertes Filtermedium dem besagten Rohmaterial-Zufuhrgehäuse (15) zuzuführen, wenn besagtes Filtermedium in besagter Filtervorrichtung (26) kontaminiert ist.

9. Eine Vorrichtung nach einem der Ansprüche 1 bis 8, die ferner Gassaugrohre (38) umfaßt, wobei jedes Gassaugrohr eine Mehrzahl von kleinen Löchern aufweist, die in Nähe der Rückstandaustragsöffnung (3) im Reaktionsofen (2) angeordnet sind, und wobei die besagten Gassaugrohre (38) an einem Ende über ein Sauggebläse (39) mit einer bis zum Verbrennungsmotor (9) führenden Leitung verbunden sind, und
wobei ein Heizkörper (37) in besagtem Reaktionsofen (2) zwischen dem Lüftungsrohr (19) und besagten Gassaugrohren (38) angeordnet ist.

10. Eine Vorrichtung nach einem der Ansprüche 1 bis 9, bei der die Regelungsmittel adaptiert sind, um die Temperatur des in besagtem Gasabflußrohr (6) fließenden Gases wesentlich auf dem Siedepunkt von Wasser oder in Nähe desselben zu halten.

## Revendications

1. Dispositif pour la pyrolyse de déchets organiques comprenant un four de réaction (2) dont la partie supérieure est connectée à un compartiment d'amenée de matériau brut (15) et un tuyau de décharge de gaz (6), et qui est pourvu d'un orifice de décharge de résidus (3) au niveau d'une partie inférieure de celui-ci, et d'un tuyau de ventilation (19, 19') pour amener de l'air, caractérisé en ce que :
ledit tuyau de décharge de gaz (6) est connecté, au niveau de son autre extrémité, à un moteur à combustion interne (9) par l'intermédiaire d'un dispositif de refroidissement de gaz (7) ;
un réservoir de goudron (32) est connecté à l'extrémité inférieure dudit dispositif de refroidissement de gaz (7) ; et
un détecteur de température (11) est disposé dans un espace supérieur dudit four de réaction (2) ou dans ledit tuyau de décharge de gaz (6) à proximité dudit four de réaction (2) ;
et caractérisé par des moyens de commande (12) qui commandent la quantité de matériau brut à délivrer dans ledit four de réaction (2) afin de maintenir la température du gaz s'écoulant dans ledit espace supérieur dudit four de réaction (2) ou dans ledit tuyau de décharge de gaz (6) sensiblement à une température prédéterminée ou proche de celle-ci.

2. Dispositif selon la revendication 1, dans lequel
un tuyau de refroidissement (20), dont une extrémité est connectée à une pompe à eau (21), est disposé entre le tuyau de ventilation (19) et l'orifice de décharge de résidus (3) dans le four de réaction (2), et
ledit tuyau de refroidissement (20) est connecté, au niveau de son autre extrémité, à un tuyau à eau (22) situé à l'extrémité inférieure d'une zone de réduction dans ledit four de réaction (2), de la vapeur étant délivrée par ledit tuyau à eau (22) dans ledit four de réaction (2).

3. Dispositif selon la revendication 1 ou la revendication 2, dans lequel un détecteur de température (24), destiné à détecter la présence d'une accumulation de matériau brut (23) dans le four de réaction (2), est disposé à une hauteur prédéterminée dans ledit four de réaction (2) et des moyens de commande (12) sont prévus afin de commander la quantité de résidus à décharger par l'orifice de décharge de résidus (3) afin de maintenir la hauteur de ladite accumulation (23) sensiblement constante.

4. Dispositif selon l'une quelconque des revendications 1 à 3, comprenant en outre :
un dispositif d'aspiration principal (8) pour décharger du gaz par le tuyau de décharge de gaz (6) ; et
un dispositif d'aspiration auxiliaire (16) pour décharger de l'air entrant par une trémie d'amenée de matériau brut (1) dans le compartiment d'amenée de matériau brut (15), ledit dispositif d'aspiration auxiliaire (16) étant disposé au niveau d'une partie d'une paroi latérale dudit compartiment d'amenée de matériau brut (15), ladite partie étant située à une position plus haute que l'ouverture inférieure de ladite trémie (1).

5. Dispositif selon l'une quelconque des revendications 1 à 4, dans lequel le réservoir de goudron (32) est adapté pour que le goudron se dépose au fond de celui-ci, ledit réservoir de goudron (32) étant pourvu au niveau de ses parties supérieure et intermédiaire d'orifices à travers lesquels un liquide de faible densité et un liquide de densité intermédiaire peuvent être respectivement retirés.

6. Dispositif selon l'une quelconque des revendications 1 à 5, dans lequel un séparateur de goudron (25) est connecté à un tuyau du côté de sortie du dispositif de refroidissement de gaz (7), et un réservoir de goudron (33) est connecté au séparateur de goudron (25) .

7. Dispositif selon la revendication 6, dans lequel un dispositif à piston (33c) est fixé au réservoir de goudron (33) afin d'envoyer, sous pression, un liquide dans ledit réservoir de goudron (33) vers une couche de combustion (54).

8. Dispositif selon l'une quelconque des revendications 1 à 7, comprenant en outre, entre le dispositif de refroidissement de gaz (7) et le moteur à combustion interne (9), un dispositif de filtrage (26) afin d'enlever le goudron résiduel du gaz et qui utilise, en tant que milieu de filtrage, un matériau brut destiné à être guidé vers le compartiment d'amenée de matériau brut (15), ledit dispositif de filtrage (26) comprenant des moyens (26b) pour remplacer ledit milieu de filtrage avec du nouveau matériau et des moyens (26d) pour guider ledit milieu de filtrage contaminé vers ledit compartiment d'amenée de matériau brut (15) lorsque ledit milieu de filtrage dans ledit dispositif de filtrage (26) est contaminé.

9. Dispositif selon l'une quelconque des revendications 1 à 8,
comprenant en outre des tuyaux d'aspiration de gaz (38) ayant chacun une pluralité de petits trous, disposés à proximité de l'orifice de décharge de résidus (3) dans le four de réaction (2), lesdits tuyaux d'aspiration de gaz (38) ayant une extrémité communiquant, par l'intermédiaire d'un dispositif d'aspiration (39), avec une ligne s'étendant vers le moteur à combustion interne (9), et
un corps chauffant (37) est disposé dans ledit four de réaction (2) entre le tuyau de ventilation (19) et lesdits tuyaux d'aspiration de gaz (38).

10. Dispositif selon l'une quelconque des revendications 1 à 9, dans lequel les moyens de commande sont adaptés pour maintenir la température du gaz s'écoulant dans ledit tuyau de décharge de gaz (6) sensiblement au point d'ébullition de l'eau ou proche de celui-ci.
